# EUROPÄISCHE PATENTSCHRIFT

(11) **EP 2 259 032 B1**
(45) Veröffentlichungstag und Bekanntmachung des Hinweises auf die Patenterteilung: **19.06.2013**
(21) Anmeldenummer: 09160136.9
(22) Anmeldetag: 13.05.2009
(51) Int. Cl.: G01G 21/28

(54) **Windschutzvorrichtung für ein Laborgerät**
Wind protection device for a laboratory device
Dispositif de protection contre le vent pour un appareil de laboratoire

(43) Veröffentlichungstag der Anmeldung: 08.12.2010
(73) Patentinhaber: Mettler-Toledo AG, 8606 Greifensee (CH)
(72) Erfinder: Lüchinger, Paul, 8610, Uster (CH); Ehrbar, Sandra, 8605, Gutenswil (CH)

(56) Entgegenhaltungen:
- EP-A- 1 195 584
- EP-A- 1 195 585
- EP-A- 1 355 032
- EP-A- 1 617 191
- FR-A- 2 672 482

## Beschreibung

Die Erfindung betrifft eine Windschutzvorrichtung für ein Laborgerät, die einen eine Waagschale umgebenden Wägeraum umschliesst und welche Windschutzvorrichtung eine Rückwand, eine Frontwand, zwei Seitenwände und eine Abdeckung beinhaltet.

Laborgeräte dieser Art dienen beispielsweise als Analysewaagen in vielen Bereichen der Industrie, insbesondere in Labors von Forschungs- und Entwicklungsabteilungen, aber auch in der Produktion, beispielsweise in der Qualitätskontrolle.

In der US 4 700 793 A ist eine Analysewaage mit einem Wägeraum ausführlich beschrieben. Analysewaagen sind Waagen mit sehr hoher Auflösung. Demzufolge können bereits kleinste auf das Wägegut oder auf den Lastaufnehmer einwirkende äussere Einflüsse das Wägeresultat verfälschen. Die äusseren Einflüsse sind selten stabil und dies kann dazu führen, dass das genaue Gewicht des Wägeguts nicht ermittelt werden kann. Zum Schutz des Wägesystems vor Umgebungseinflüssen wird deshalb ein Wägeraum mit einem sogenannten Windschutz umschlossen.

Wie in der US 4 700 793 A dargestellt, weist der Windschutz einer Analysewaage meistens zwei schiebbare Seitenwände und gegebenenfalls auch eine schiebbare Abdeckung auf, da die Beschickung mit Wägegut üblicherweise von der Seite auf den Lastaufnehmer erfolgt, gegebenenfalls auch von oben. Die Frontwand ist üblicherweise mit dem Gehäuse der Waage starr verbunden und verleiht dem Windschutz durch seine Stützwirkung Stabilität. Ein Windschutz muss eine möglichst geschlossene und stabile Struktur aufweisen, damit Luftbewegungen der Umgebung nicht über Spalten und Öffnungen des Windschutzes in den Wägeraum übertragen werden und dadurch im Wägeraum störende Luftbewegungen entstehen.

Damit der Wägeraum und insbesondere die Seitenwände des Windschutzes besser gereinigt werden können, wird in der US 6 686 545 B2 ein Windschutz vorgeschlagen, dessen Frontwand und die Seitenwände mittels einer Schwenkbewegung aus einer formschlüssigen Verankerung gelöst und mittels einer anschliessenden Ziehbewegung von der Waage entfernt werden können. Die Abdeckung ist über eine Linearführung mit dem als Rückwand dienenden Waagengehäuse verbunden und kann horizontal über das Waagengehäuse geschoben werden, wodurch der Windschutz nach oben offen ist. Ferner kann auch die Abdeckung mittels einer Schwenkbewegung von der Linearführung getrennt werden.

In der Praxis ist ferner bekannt, dass das Volumen des Wägeraums die Präzision einer Waage begrenzen kann. Dies deshalb, weil in einem grossen Wägeraum die eingeschlossene Luft wesentlich stärker auf Umgebungseinflüsse ausserhalb des Windschutzes reagiert, beispielsweise durch Einstrahlung von Wärme und Licht. Ferner sind bei einem grossen Wägeraum im Verhältnis zum eingeschlossenen Volumen weniger Flächen vorhanden, welche die bewegten Luftmassen, beispielsweise nachdem die Seitenwand geschlossen wurde, bremsen. Ein kleines Wägeraum- Volumen hilft deshalb, dass die Luft im Innern des Wägeraums sehr rasch zur Ruhe kommt. Zudem wird die Luft in einem Wägeraum geringer Höhe nur minimal umgeschichtet und es kann sich innerhalb des Wägeraums rasch ein verhältnismässig stabiles Temperaturprofil über die Wägeraumhöhe ausbilden.

In der DE 89 04 088 U1 wird eine Waage offenbart, die einen Windschutz aufweist, der in der Höhe anpassbar ist.

Im Zuge der Einführung zeitoptimierter Arbeitsabläufe, werden vermehrt unterschiedliche Operationen miteinander oder nacheinander direkt im Wägeraum vorgenommen, ohne dass das Wägegut mehrere Male auf den Lastaufnehmer aufgelegt beziehungsweise vom Lastaufnehmer entfernt wird. Dies ist insbesondere bei der Herstellung von Lösungen oder Pulvermischungen der Fall. Die Ausgestaltung eines multifunktionalen Wägeraums wird beispielsweise in der US 6 603 081 B2 offenbart. Darin ist ersichtlich, dass eine Vielzahl von Gerätschaften wie beispielsweise Dosiereinheiten, Haltevorrichtungen für Entnahmegefässe und Zielgefässe, Schutzabdeckungen, Anzeigen und dergleichen mehr auf einen bestimmten Arbeitsablauf optimiert, temporär im Wägeraum installiert werden können. Gezeigt wird beispielsweise ein Zwischenboden mit einem Durchbruch, der Abhängig vom auf die Waagschale aufzulegenden Einwaagegefäss in einer geeigneten Höhe befestigt werden kann. Dadurch wird eine Analysewaage zum ausschliesslichen Verwägen von Wägegütern zu einem multifunktionalen Laborgerät.

Obwohl der in der US 6 603 081 B2 offenbarte Zwischenboden eine Unterteilung und daher teilweise Reduzierung des Wägeraum- Volumens ermöglicht, ist aufgrund des bestehenden Windschutzes der Zugang zu der im Zwischenboden vorhandenen Öffnung und damit zum Wägeraum durch die überstehenden Wände stark eingeschränkt. Ferner ist eine Verschiebung des Zwischenbodens mit einem gewissen Zeitaufwand verbunden. Sofern die Waage beispielsweise in einer sogenannten Glovebox eingesetzt wird, kann ein höher oder tiefer stellen des Zwischenbodens ausserordentlich schwierig sein.

Die zunehmende Funktionalität und die Forderung nach höherer Präzision der vorangehend beschriebenen Laborgeräte darf aber nicht deren Bedienungsfreundlichkeit einschränken.

Die Aufgabe der vorliegenden Erfindung ist deshalb, einen Windschutz für ein Laborgerät zu schaffen, welcher bei gleichzeitiger Anpassbarkeit des Wägeraums an die Höhe des Einwaagegefässes einen besseren Zugang zum Wägeraum bietet.

Diese Aufgabe wird durch eine Windschutzvorrichtung mit den kennzeichnenden Merkmalen des Anspruchs 1 gelöst. Weitere bevorzugte Ausführungsformen der Erfindung sind Bestandteil der abhängigen Ansprüche.

Die erfindungsgemässe Windschutzvorrichtung für ein Laborgerät umschliesst einen eine Waagschale umgebenden Wägeraum. Sie beinhaltet eine Rückwand, eine Frontwand, zwei Seitenwände, eine Abdeckung mit mindestens einem Durchbruch und einen durch Endkanten begrenzten Boden. Die Abdeckung ist mindestens mit einer der beiden Seitenwände und/oder mit der Frontwand und/oder mit der Rückwand verbunden, wobei die Abdeckung und die mit ihr verbundenen Wände zusammen relativ zur Waagschale vertikal verschiebbar sind. Der Begriff Wände umfasst in der vorliegenden Beschreibung mindestens eine Seitenwand, Frontwand oder Rückwand. Ferner können die vertikal verschiebbare Seitenwand und/oder die Frontwand und/oder die Rückwand an der ihnen zugewandten Endkante des Bodens in vertikaler Richtung vorbeigeführt werden. Zudem ist in jeder vertikalen Position der Abdeckung mindestens eine Seitenwand relativ zur Abdeckung horizontal verschiebbar. Ferner kann zumindest die Rückwand zweiteilig ausgeführt sein, wobei ein erstes Rückwandteil mit der Abdeckung verbunden und ein zweites Rückwandteil mit dem Boden verbunden ist und die beiden Teile flächig aneinander anliegend und daher einander teilweise überlappend, relativ zueinander verschiebbar sind.

Diese Windschutzvorrichtung hat den Vorteil, dass deren Höhe immer einem auf der Waagschale aufliegenden Zielgefäss angepasst werden kann, ohne gleichzeitig den Zugang zum Wägeraum und zum Bereich oberhalb der Abdeckung zu erschweren. Dieser Zugang zum Bereich oberhalb der Abdeckung wird dadurch sichergestellt, dass mindestens eine Wand zusammen mit der Abdeckung vertikal verschiebbar ist. Dadurch bleibt die Oberkante der mit der Abdeckung vertikal verschiebbaren Wand immer auf gleicher Höhe zur Abdeckung, während die Oberkanten der nicht mit der Abdeckung verbundenen Wände immer im gleichen, senkrechten Abstand zum Boden verbleiben. Entsprechend können auch weitere Geräte in den Bereich oberhalb der Abdeckung hineinragen oder in diesem angeordnet werden, ohne dass die Abdeckung überragende Oberkanten aller Wände den Zugang zu diesen behindern oder gar verhindern.

Ferner ist die im Wägeraum angeordnete Waagschale immer über mindestens eine horizontal verschiebbare Seitenwand gut erreichbar, so dass über diesen Zugang zum Wägeraum auf einfachste Weise Zielgefässe auf die Waagschale aufgelegt beziehungsweise von dieser entfernt werden können. Durch den seitlichen Zugang muss der Windschutz weder zerlegt, noch die eingestellte Höhe des Windschutzes verändert werden. Letzteres gilt logischerweise nur bei der seriellen Verwendung gleich hoher Zielgefässe.

Der Zugang zum Raum oberhalb der Abdeckung ist wichtig, da die Abdeckung mindestens einen Durchbruch aufweist, durch welchen beispielsweise Dosiergut in das Zielgefäss eingefüllt werden kann. Durch die Anpassung der Wägeraumhöhe an ein auf die Waagschale gestelltes Zielgefäss bleibt nämlich kaum genügend Platz, um die Einfüllöffnung desselben zu erreichen. Das Eindosieren durch den Durchbruch kann mittels einer Dosiervorrichtung oder manuell geschehen.

Bei der Verwendung einer Dosiervorrichtung, welche oberhalb der Abdeckung angeordnet ist und deren Funktionseinheiten, beispielsweise eine Antriebs- und Steuereinheit hinter der Rückwand angeordnet ist, ist vorzugsweise mindestens die Rückwand mit der Abdeckung vertikal verschiebbar. Wenn manuell eindosiert werden soll, sind vorzugsweise mindestens die Frontwand, besser noch die die Frontwand und die beiden Seitenwände mit der Abdeckung verbunden und vertikal verschiebbar. Dem entsprechend ist das Sockelgehäuse eines mit dem erfindungsgemässen Windschutz ausgerüsteten Laborgerätes oder dessen Auflage dahingehend auszulegen, dass die Wände nirgends anstehen, wenn sie in vertikaler Richtung relativ zur Waagschale verschoben werden.

In einer weiteren Ausführungsform weist die Abdeckung einen Abdeckungsrahmen und ein Abdeckteil auf, wobei der mindestens eine Durchbruch im Abdeckteil angeordnet ist. Somit sind die mindestens eine Seitenwand und/oder die Frontwand und/oder die Rückwand mit dem Abdeckungsrahmen verbunden. Der Abdeckungsrahmen ist erfindungsgemäss zusammen mit dem Abdeckteil und mit den mit ihm verbundenen Wänden relativ zur Waagschale vertikal verschiebbar. Ferner ist das Abdeckteil relativ zum Abdeckungsrahmen horizontal verschiebbar. Dadurch kann die Waagschale auch von oben beschickt beziehungsweise entladen werden. Ferner kann die Dosiervorrichtung auch mit dem Abdeckteil verbunden und horizontal zum Abdeckungsrahmen verschiebbar sein.

Um einen möglichst optimalen Zugang zum Wägeraum und zur Abdeckung zu erreichen, sind vorzugsweise beide Seitenwände mit der Abdeckung beziehungsweise mit dem Abdeckungsrahmen verbunden und relativ zur Abdeckung horizontal verschiebbar.

Damit der Wägeraum und die Windschutzvorrichtung besser gereinigt werden können, sind vorzugsweise mindestens eine Seitenwand und/oder die Frontwand mit der Abdeckung beziehungsweise mit dem Abdeckungsrahmen lösbar verbunden.

Sofern gewünscht, kann das das Abdeckteil in den Abdeckungsrahmen lose einlegbar sein. Dies kann den Reinigungsprozess des Wägeraums entscheidend vereinfachen, sei es, dass das Abdeckteil dadurch einfacher reinigbar ist oder sogar als Wegwerfteil konzipiert ist. Dasselbe gilt natürlich auch für den Boden. Dieser kann ferner zweigeteilt sein, so dass die Waagschale zur Entfernung des Bodens nicht entfernt werden muss. Unterhalb der Waagschale und des Bodens kann ferner eine Auffangschale für verschüttetes Dosiergut der Dosiervorrichtung vorhanden sein.

Wie bereits weiter oben beschrieben, weist die Abdeckung mindestens einen Durchbruch auf. Gegebenenfalls kann der Durchbruch mittels eines in der Abdeckung angeordneten Schiebers verschliessbar sein.

Zur horizontalen Führung der mindestens einen, mit der Abdeckung verbundenen, verschiebbaren Seitenwand kann mindestens eine Führungsschiene an der Abdeckung beziehungsweise am Abdeckungsrahmen angeordnet sein. Ferner weist die verschiebbare Seitenwand mindestens ein an der Führungsschiene geführtes Führungsstück auf.

Da eine Windschutzvorrichtung möglichst alle in der Umgebung des Laborgeräts vorhandenen Luftströmungen abhalten soll, ist es von Vorteil, wenn eine mindestens über die Länge der Endkante sich erstreckende Dichtungsgleitleiste, Dichtungsbürste oder Dichtungswalze an mindestens einer Endkante des Bodens angeordnet ist. Diese hat die Aufgabe, einen möglichen Spalt zwischen der Endkante des Bodens und der Seitenwand abzudichten und eine die Seitenwand schonende Verschiebung derselben relativ zur Endkante zu ermöglichen. Bei Seitenwänden mit besonders zerstörungsanfälliger Oberfläche, beispielsweise beschichteten Glasscheiben, kann auch eine Dichtungswalze vorhanden sein, welche bei einer vertikalen Verschiebung der Seitenwand abrollt und deren Oberfläche bei einer horizontalen Verschiebung der Seitenwand ausreichende Gleiteigenschaften aufweist. Wenn dies auch nicht ausreicht, können selbstverständlich entlang der Endkante des Bodens auch eine Abstützkugel oder eine Reihe Abstützkugeln an diesem befestigt sein, so dass unabhängig von der Richtung der Verschiebung nie eine Gleitbewegung zwischen den Abstützkugeln und der Seitenwand stattfindet, da sich die Richtung der Drehbewegung der Abstützkugel nach der Bewegung der Seitenwand ausrichtet. Die Zwischenräume zwischen den einzelnen Abstützkugeln oder zwischen deren hervorstehenden Kuppen müssen beispielsweise mit Bürsten- oder Leistenabschnitten soweit ausgefüllt sein, dass kein oder nur noch ein äusserst kleiner Spalt zwischen zwei benachbarten Abstützkugeln und der auf den Abstützkugeln anliegenden Seitenwand vorhanden ist. Zur vertikalen und/oder horizontalen Verschiebung kann ferner mindestens ein Antrieb vorhanden sein. Vorzugsweise sind aber ein Antrieb für die vertikale Verschiebung der Abdeckung mit der damit verbundenen Wand und ein weiterer Antrieb zur horizontalen Verschiebung mindestens einer Seitenwand vorhanden. Diese können mit einer Steuervorrichtung verbunden sein, welche von einer Bedienperson über eine Eingabeeinheit bedient werden kann.

Bei der Verwendung besonders kleiner Einwaagegefässe kann die Abdeckung so nahe zum Boden angeordnet sein, dass ein Wechsel des Einwaagegefässes kaum mehr möglich ist. Um den Bedienungskomfort zu erhöhen, kann deshalb der Boden ausgehend von seinem Flächenschwerpunkt zu mindestens einer horizontal verschiebbaren Seitenwand hin, abfallend ausgestaltet sein. Dies hat ferner den weiteren Vorteil, dass beispielsweise verschüttetes pulverförmiges Dosiergut zur Seitenwand hin und seitlich aus dem Wägeraum rutscht. Desgleichen können verschüttete Flüssigkeiten zur Seite hin aus dem Wägeraum rinnen. Gegebenenfalls ist im Bereich der Endkante im Boden eine Auffangrinne oder Auffangschale für verschüttetes Dosiergut vorzusehen.

Ein noch besserer Zugang kann dadurch geschaffen werden, dass auch die Abdeckung analog zum Boden ausgestaltet ist. Dementsprechend ist ausgehend von der mindestens einen horizontal verschiebbaren Seitenwand die Abdeckung zu ihrem Flächenschwerpunkt hin abfallend ausgestaltet.

Sofern die Frontwand aus transparentem Material besteht, kann zur Verbesserung des Einblicks in den Wägeraum ausgehend von der Frontwand die Abdeckung zu ihrem Flächenschwerpunkt hin abfallend ausgestaltet sein. Dasselbe ist selbstverständlich in analoger Weise auch beim Boden möglich. Ferner können der Boden und die Abdeckung auch zur Rückwand hin entsprechend mit Gefälle versehen sein.

Die erfindungsgemässe Windschutzvorrichtung kann in Laborgeräten mit verschiedensten Ausprägungen verwendet werden. Das Laborgerät kann beispielsweise eine Waage, ein Dosiergerät eine Pipettier- oder Titriervorrichtung sein.

Wie weiter oben beschrieben, kann das Laborgerät eine Dosiervorrichtung beinhalten. Die Dosiervorrichtung ist oberhalb der Abdeckung angeordnet und deren Austragungsöffnung für Dosiergut vorzugsweise zum Durchbruch ausgerichtet.

Selbstverständlich kann die Dosiervorrichtung auch zumindest teilweise durch den Durchbruch hindurch ragen, wobei deren Austragungsöffnung für Dosiergut dadurch unterhalb der Abdeckung der Windschutzvorrichtung im Wägeraum angeordnet ist.

Sofern zur vertikalen Verschiebung der Abdeckung beziehungsweise zur Höhenverstellung von Teilen der Windschutzvorrichtung ein Antrieb eingesetzt wird, ist im Laborgerät vorzugsweise eine Abtastvorrichtung vorhanden, mittels welcher Abtastvorrichtung zumindest die Höhe eines auf die Waagschale aufgelegten Zielgefässes erfassbar ist.

In einer möglichen Ausgestaltung kann die Abtastvorrichtung zwei Laserdioden und zwei Fotozellen beinhalten, wobei sich die beiden von den Laserdioden emittierten Strahlen unmittelbar unterhalb des Durchbruchs oder der Austragungsöffnung der Dosiervorrichtung kreuzen.

Die erfindungsgemässe Windschutzvorrichtung und deren Verwendung in einem Laborgerät werden anhand der folgenden Figuren näher beschrieben, wobei gleiche Elemente mit denselben Bezugszeichen versehen sind. Es zeigen:
- Figur 1: eine dreidimensionale Darstellung eines Laborgeräts mit einer Dosiervorrichtung und mit einer erfindungsgemässen Windschutzvorrichtung in einer ersten Ausführung, mit deren vertikal verschiebbaren Abdeckung beide Seitenwände, die Frontwand und ein Teil der Rückwand verbunden ist, wobei die dargestellte Lage der Abdeckung dem maximal möglichen Abstand vom Boden entspricht;
- Figur 2: das Laborgerät aus Figur 1 mit einer geöffneten Seitenwand, wobei die dargestellte Lage der Abdeckung dem minimal möglichen Abstand vom Boden entspricht;
- Figur 3: eine dreidimensionale Darstellung eines Laborgeräts mit einer Dosiervorrichtung und mit einer erfindungsgemässen Windschutzvorrichtung in einer zweiten Ausführung, mit deren vertikal verschiebbaren Abdeckung eine Seitenwand und ein Teil der Rückwand verbunden ist und die zweite Seitenwand und die Frontwand mit dem Boden verbunden sind;
- Figur 4: eine dreidimensionale Darstellung einer erfindungsgemässen Windschutzvorrichtung mit einem Antrieb für beide Seitenwände und den Linearführungen für die vertikale Verschiebung der Abdeckung und der Wände;
- Figur 5: eine dreidimensional dargestellte Detailansicht der lösbaren Frontwandbefestigung;
- Figur 6: eine dreidimensional dargestellte Detailansicht der lösbaren Seitenwandbefestigung;
- Figur 7: eine Detailansicht der Abdeckung und des Bodens im Schnitt, wobei ein Zielgefäss geringer Bauhöhe auf der Waagschale aufliegt;
- Figur 8: eine Detailansicht der Abdeckung und des Bodens im Schnitt, wobei ein Zielgefäss grosser Bauhöhe auf der Waagschale aufliegt und die Abdeckung eine Abtastvorrichtung aufweist;
- Figur 9: eine dreidimensionale Darstellung eines Laborgeräts mit einer Dosiervorrichtung und mit einer erfindungsgemässen Windschutzvorrichtung in einer dritten Ausführung, wobei die Abdeckung in einen Abdeckungsrahmen und in ein, zu diesem horizontal verschiebbaren Abdeckteil unterteilt ist.

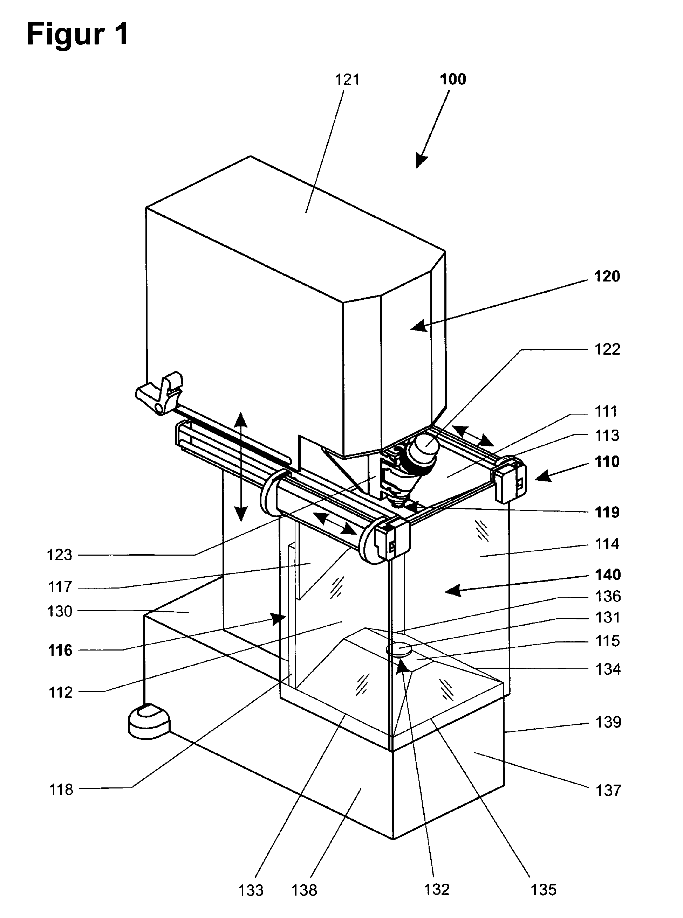

In Figur 1 ist ein Laborgerät 100 mit einer Dosiervorrichtung 120 und mit einer erfindungsgemässen Windschutzvorrichtung 110 in einer ersten Ausführung dargestellt. Die Windschutzvorrichtung 110 umfasst eine Abdeckung 111, einen durch Endkanten 133, 134, 135, 136 begrenzten Boden 115, eine erste Seitenwand 112 und eine zweite Seitenwand 113, eine Frontscheibe 114 und eine geteilte Rückwand 116. Die Windschutzvorrichtung 110 umschliessen einen Wägeraum 140.

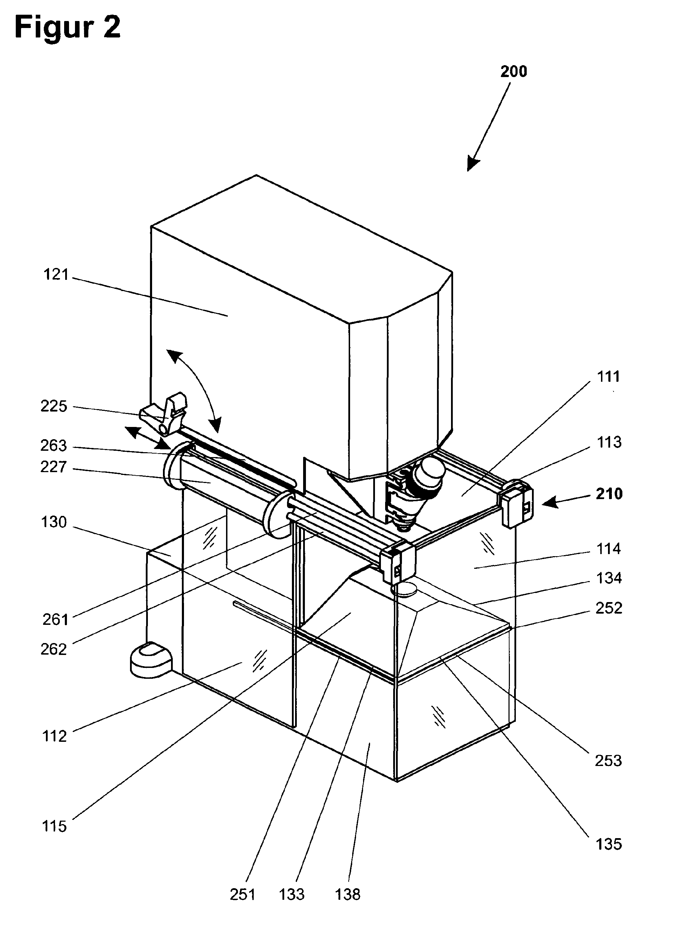

Die Windschutzvorrichtung 110 ist geschlossen dargestellt, wobei die Seitenwände 112, 113 und die Frontwand 114 aus transparentem Material gefertigt sind, so dass der von der Windschutzvorrichtung 110 umschlossene Wägeraum 140 von drei Seiten einsehbar ist. Beide Seitenwände 112, 113, sind relativ zur Abdeckung 111 horizontal linear verschiebbar. Auf die dazu notwendigen Linearführungen wird in der Beschreibung von Figur 2 näher eingegangen.

Der Boden 115 ist mit einem Sockelgehäuse 130 des Laborgeräts 100 fest verbunden. Im Sockelgehäuse 130 ist eine nicht dargestellte Wägezelle angeordnet, deren Lastaufnahmebereich mittels eines nicht sichtbaren Lastübertragungselements mit einer oberhalb des Bodens 115 und daher im Wägeraum 140 angeordneten Waagschale 131, verbunden ist. Wie dargestellt, fällt der Boden 115 von seiner Mitte ausgehend, jeweils gegen die beiden Seitenwände 112, 113 und die Frontwand 114 ab. Dies schliesst nicht aus, dass sich einzelne Flächen des Bodens 115 auch horizontal erstrecken können, wie dies in der Figur 1 dargestellt ist. Die Mitte des Bodens 115 ist mit einer Durchführung 132 versehenen, damit das wegen der Waagschale 131 nicht einsehbare Lastübertragungselement durch den Boden 115 in den Wägeraum 140 hineingeführt werden kann.

Wie der Boden 115, ist in vergleichbarer Weise auch die Abdeckung 111 pyramidenstumpfartig ausgestaltet, nur kopfstehend. Anstelle der Durchführung 132 weist die Abdeckung 111 einen Durchbruch 119 auf. Dieser Durchbruch 119 kann, wie weiter unten beschrieben, einem Dosierkopf 122 angepasst sein.

Die geteilte Rückwand 116 erstreckt sich in ihrer Breite über die gesamte, ihr zugewandte Endkante 136 des Bodens 115 und beinhaltet ein erstes Rückwandteil 117 und ein zweites Rückwandteil 118, wobei das erste Rückwandteil 117 mit der Abdeckung 111 und das zweite Rückwandteil 118 mit dem Boden 115 und mit dem Sockelgehäuse 130 fest verbunden sind. Die beiden Rückwandteile 117, 118 sind derart zueinander angeordnet, dass sie flächig aneinander anliegen und daher einander teilweise überlappen, aber dennoch relativ zueinander vertikal verschiebbar sind.

Die Abdeckung 111 und die mit ihr verbundenen Wände sind relativ zum Sockelgehäuse 130 in vertikaler Richtung verschiebbar. Damit dies möglich ist, müssen die Frontwand 114 und die beiden Seitenwände 112, 113 an den ihnen zugewandten Endkanten 133, 134, 135 des Bodens 115 und an den, den Endkanten 133, 134, 135 anschliessenden Gehäusewänden 137, 138, 139 des Sockelgehäuses 130 in vertikaler Richtung vorbeigeführt werden können. Vorzugsweise sind deshalb die Gehäusewände 137, 138, 139 des Sockelgehäuses 130 vertikal abfallend ausgestaltet und die Seitenwände 112, 113 und die Frontwand 114 überlappen diese Gehäusewände 137, 138, 139 teilweise. Die Höhe des Sockelgehäuses 130 richtet sich dabei vorzugsweise nach der vertikalen Verschiebestrecke der Abdeckung 111 relativ zum Boden 115 beziehungsweise zur Waagschale 131. Sofern eine nicht dargestellte Auflagefläche des Laborgerätes 100, beispielsweise ein Labortisch, geeignete Aussparungen aufweist, in welche bei einer Verschiebung der Abdeckung 111 die Frontwand 114 und die Seitenwände 112, 113 eindringen können, kann die Höhe des Sockelgehäuses 130 auch geringer gewählt werden.

Die Dosiervorrichtung 120 weist eine nicht dargestellte Antriebs- und Steuereinheit auf, welche in einem Dosiervorrichtungsgehäuse 121 untergebracht ist. Ein Dosierkopf 122 ist in eine Dosierkopfhalterung 123 der Dosiervorrichtung 120 lösbar eingesetzt und kann mit der Antriebs- und Steuereinheit gekoppelt werden. Ferner ragt ein Teil des Dosierkopfs 122 durch den Durchbruch 119 hindurch in den Wägeraum 140 hinein. Der Durchbruch 119 ist dem entsprechenden Querschnitt des Dosierkopfs 122 angepasst, welcher sich bei in die Dosierkopfhalterung 123 eingesetztem Dosierkopf 122 im Bereich des Durchbruchs 119 befindet. Dadurch kann verhindert werden, dass Luftströmungen aus der Umgebung über den Durchbruch 119 in den Wägeraum 140 gelangen können. Je nach Ausgestaltung des Dosierkopfs 122 und des in der Abdeckung 111 vorhandenen Durchbruchs 119 kann auch auf eine Dosierkopfhalterung 123 verzichtet werden.

Vorzugsweise ist deshalb zumindest der Dosierkopf 122 oder wie in der Figur 1 dargestellt, die gesamte Dosiervorrichtung 120 mit der Abdeckung 111 verbunden und folgt der vertikalen Verschiebung der Abdeckung 111 nach. Die in Figur 1 dargestellte Lage der Abdeckung 111 entspricht dem maximal möglichen Abstand vom Boden 115.

Die Figur 2 zeigt das Laborgerät 200, welches nahezu vollständig dem Laborgerät 100 aus Figur 1 entspricht. Anders als in Figur 1, ist in Figur 2 die Windschutzvorrichtung 210 des Laborgeräts 200 mit der geöffneten ersten Seitenwand 112 dargestellt und die Lage der Abdeckung 111 entspricht dem minimal möglichen Abstand zum Boden 115.

Die erste Seitenwand 112 ist mit einem Führungsstück 227 versehen, welches an einer ersten Führungsschiene 261 und an einer, zu dieser parallelen zweiten Führungsschiene 262 linear geführt ist. Beide Führungsschienen 261, 262 sind mit der Abdeckung 111 fest verbunden und erstrecken sich parallel zur ersten Gehäusewand 138.

Da die Windschutzvorrichtung 210 des Laborgeräts 200 möglichst alle in der Umgebung des Laborgeräts 200 vorhandenen Luftströmungen abhalten soll, ist die der ersten Seitenwand 112 zugewandte Endkante 133 mit einer ersten Dichtungsgleitleiste 251 versehen. Auch zwischen der zweiten Seitenwand 113 und der ihr zugewandten Endkante 134 ist eine zweite Dichtungsgleitleiste 252, sowie zwischen der Frontwand 114 und der ihr zugewandten Endkante 135 ist eine dritte Dichtungsgleitleiste 253 angeordnet. Wie die Figur 2 zeigt, erstreckt sich die mit der ersten Seitenwand 112 in Berührung stehende erste Dichtungsgleitleiste 251 nahezu über die gesamte erste Gehäusewand 138 des Sockelgehäuses 130. Diese hat die Aufgabe, einen möglichen Spalt zwischen der Endkante 133 des Bodens 115 und der ersten Seitenwand 112 abzudichten und eine schonende Verschiebung der ersten Seitenwand 112 relativ zur Endkante 133 zu ermöglichen, so dass die erste Seitenwand 112 nicht zerkratzt wird.

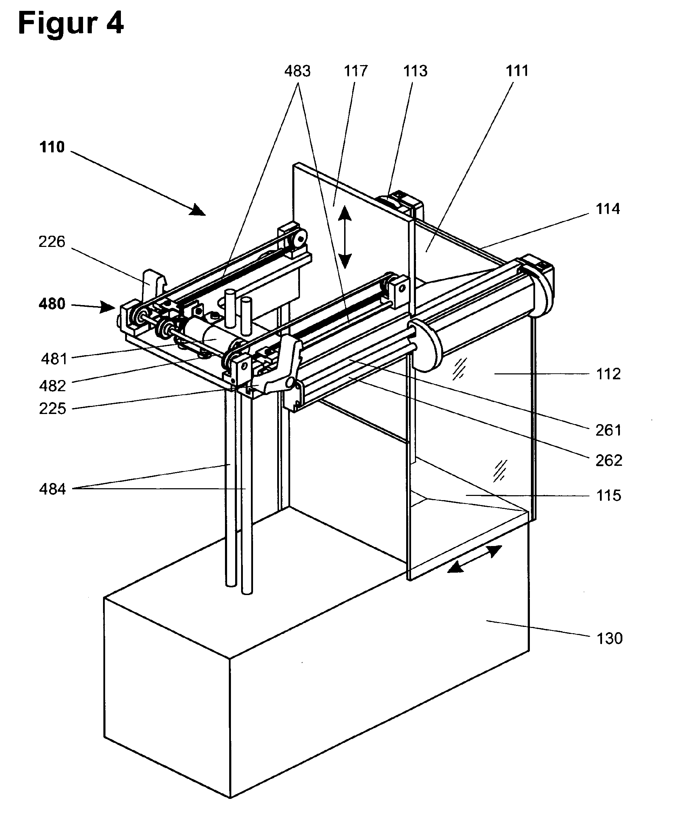

In Figur 2 ist ferner ein erster Mitnehmer 225 in der Form eines Winkelhebels dargestellt. Dieser kann entlang eines im Dosiervorrichtungsgehäuse 121 vorhandenen und zu den Führungsschienen 261, 262 parallelen Langloch 263 linear verschoben werden. Diese Verschiebung erfolgt mittels eines im Dosiervorrichtungsgehäuse 121 untergebrachten, nicht dargestellten Antriebs. Dieser wird in der Beschreibung von Figur 4 weiter unten ausführlicher erklärt. Der erste Mitnehmer 225 kann durch einfaches Verschwenken mit dem Führungsstück 227 gekoppelt werden, wodurch sich die Bewegung des ersten Mitnehmers 225 auf die erste Seitenwand 112 überträgt. In analoger Weise kann für die zweite Seitenwand 113 ein zweiter Mitnehmer vorhanden sein, wobei beide Mitnehmer synchron durch den Antrieb bewegt werden. Wenn die erste Seitenwand 112 nicht mit dem ersten Mitnehmer 225 gekoppelt ist, kann diese manuell verschoben werden.

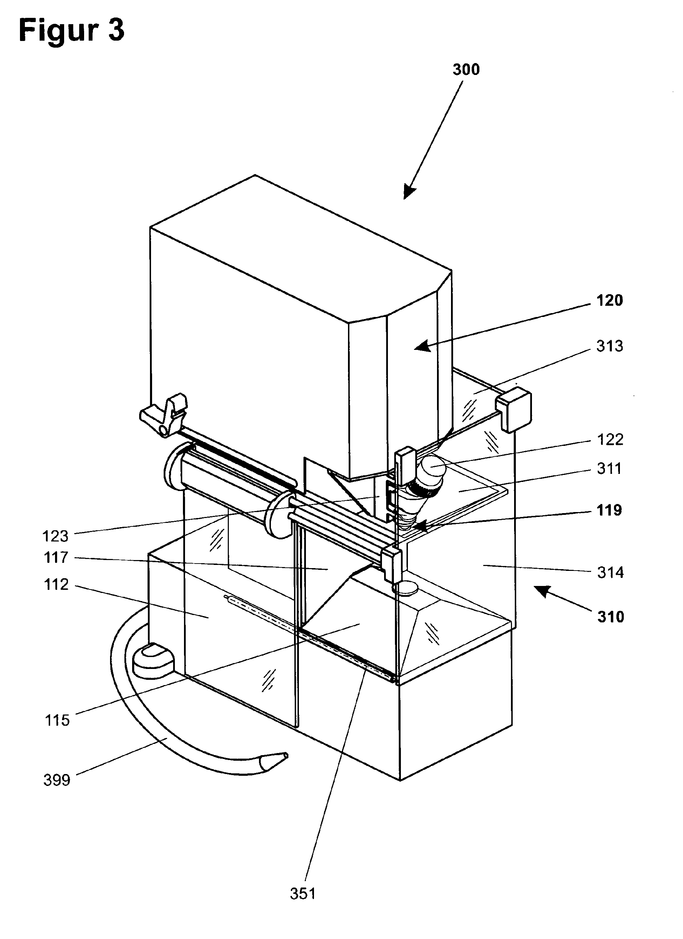

Die Figur 3 zeigt eine dreidimensionale Darstellung eines Laborgeräts 300 mit einer bereits aus den Figuren 1 und 2 bekannten Dosiervorrichtung 120. Ferner ist das Laborgerät 300 mit einer erfindungsgemässen Windschutzvorrichtung 310 in einer zweiten Ausführung ausgerüstet, mit deren vertikal verschiebbaren Abdeckung 311 eine erste Seitenwand 112 und ein erstes Rückwandteil 117 verbunden ist. Im Unterschien zu den Laborgeräten in den Figuren 1 und 2, sind die zweite Seitenwand 313 und die Frontwand 314 mit dem Boden 115 fest verbunden. Ferner ist an Stelle einer Dichtungsgleitleiste eine Dichtungswalze 351 an der der ersten Seitenwand 112 zugewandten Endkante angeordnet.

Auch in Figur 3 ist die Windschutzvorrichtung 310 des Laborgeräts 300 mit der geöffneten ersten Seitenwand 112 dargestellt und die Lage der Abdeckung 311 entspricht dem minimal möglichen Abstand vom Boden 115. Obwohl es bei dieser zweiten Ausführung schwieriger ist, einen Dosierkopf 122 in die Dosierkopfhalterung 123 der Dosiervorrichtung 120 einzusetzen, bietet die stets auf gleicher Höhe wie die Abdeckung 311 liegende Oberkante der ersten Seitenwand 112 einen ausreichenden Zugang zur Dosierkopfhalterung 123 beziehungsweise zum Durchbruch 119. Diese zweite Ausführung hat den Vorteil, dass eine Bedienperson beim Entfernen des Dosierkopfs 122 immer noch einen gewissen Schutz gegen mögliches, daran anhaftendes Dosiergut geniesst, da die die Abdeckung 311 überragende Frontwand 314 und zweite Seitenwand 313 einen transparenten, mechanischen Schutzschild bilden. Die Austragungsöffnung des Dosierkopfs 122 kann beim Entfernen somit unmittelbar über der Abdeckung 311 visuell überprüft und gegebenenfalls mit einer flexiblen Absaugvorrichtung 399 gereinigt werden, bevor der Dosierkopf 122 vollständig aus dem Laborgerät 300 entfernt wird.

In Abwandlung der in den Figuren 1 bis 3 dargestellten Ausführungen können selbstverständlich auch nur die Frontwand, nur beide Seitenwände oder die Frontwand und eine der Seitenwände mit der Abdeckung verbunden sein. Gegebenenfalls können die Befestigungsmittel der Wände auch derart ausgestaltet sein, dass sie je nach Wunsch mit der Abdeckung oder mit dem Boden verbindbar sind. Zudem können auch die mit dem Boden verbundenen Seitenwände linear verschiebbar ausgebildet sein.

In der Figur 4 wird in dreidimensionaler Darstellung die erfindungsgemässe Windschutzvorrichtung 110 von Hinten gezeigt, welche der Windschutzvorrichtung 110 aus der Figur 1 entspricht. Sämtliche Verschalungen und die gesamte Dosiervorrichtung wurden weggelassen, um einige Einzelheiten des bereits weiter oben erwähnten Antriebs 480 zu zeigen. Lediglich das Sockelgehäuse 130 ist auch noch dargestellt, um die vertikale Führung der Abdeckung 111 und der mit ihr verbundenen beiden Seitenwände 112, 113 und der Frontwand 114 anschaulicher zu zeigen, da das Sockelgehäuse 130 gleichzeitig die Basis des Bodens 115 bildet. Der Antrieb 480 weist einen Motor 481 auf, dessen Bewegungen über ein Zahnriemengetriebe 482 an den ersten Mitnehmer 225 und an einen zweiten Mitnehmer 226 übertragen werden. Beide Mitnehmer 225, 226 sind an Längsführungen 483 parallel zu den Führungsschienen 261, 262 der horizontal verschiebbaren Seitenwände 112, 113 geführt und können unabhängig voneinander mit der ihnen zugeordneten Seitenwand 112, 113 gekoppelt werden.

Ferner sind in Figur 4 zwei Vertikalführungen 484 schematisch dargestellt, um die vertikale Verschiebbarkeit der Abdeckung 111 sowie den mit ihr verbundenen Seitenwänden 112, 113, der Frontwand 114, dem ersten Rückwandteil 117 und dem Antrieb 480 aufzuzeigen. Selbstverständlich weist die Windschutzvorrichtung 110 auch für die vertikale Verschiebung eine Antriebseinheit auf, diese ist aber zugunsten der Übersichtlichkeit nicht dargestellt.

Um die Windschutzvorrichtung 110 besser reinigen zu können ist es vorteilhaft, wenn mindestens die Frontwand 114 und die Seitenwände 112, 113 auf einfache Weise demontiert werden können.

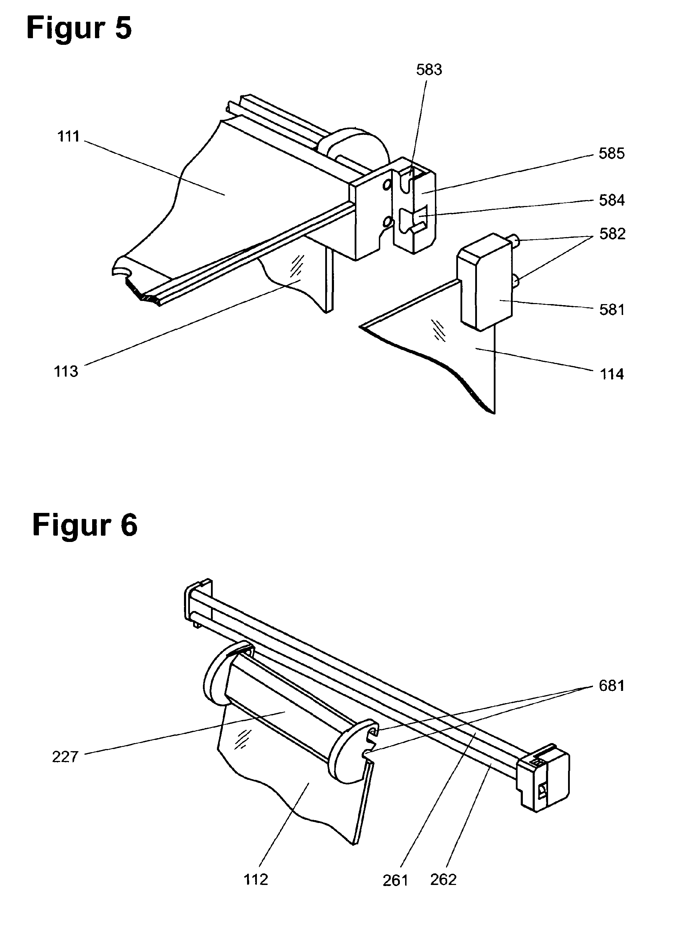

Die Figur 5 zeigt dreidimensional eine Detailansicht einer lösbaren Frontwandbefestigung, wie sie bereits in der Figur 1 dargestellt, aber nicht beschrieben ist. Des Platzbedarfs wegen ist nur ein Teil der Abdeckung 111 sowie ein Teil der zweiten Seitenwand 113 und ein Teil der von der Abdeckung 111 getrennten Frontwand 114 zu sehen. Damit die Frontwand 114 mit der Abdeckung 111 lösbar verbunden werden kann, weist diese an jeder der Abdeckung 111 zugewandten Ecke je ein Bolzenstück 581 mit je zwei Bolzen 582 auf. Die beiden Bolzen 582 können in zwei Nuten 583, 584 eingehängt werden, welche an einer Halterung 585 ausgebildet sind. Je eine dieser Halterungen 585 ist in jeder, der Frontwand 114 zugewandten Ecke der Abdeckung 111 angeordnet. Eine mit dieser Frontwandbefestigung ausgestattete Frontwand 114 ist mit einem einzigen Handgriff aus den Halterungen 585 lösbar beziehungsweise in diese einsetzbar. Ferner bietet die Ausgestaltung mit zwei Bolzen 582 der Frontwand 114 eine stabile ausgerichtete Position zur Abdeckung 111, ohne dass diese in den Halterungen 585 pendelt.

Die Figur 6 zeigt eine dreidimensional dargestellte Detailansicht einer lösbaren Seitenwandbefestigung, wie sie bereits in den vorangehenden Figuren anhand der ersten Seitenwand 112 dargestellt, aber nicht beschrieben ist. Das Führungsstück 227 weist zwei schlitzförmige, gegen die Richtung der Schwerkraft gerichtete Ausnehmungen 681 auf, so dass die erste Seitenwand 112 in die erste Führungsschiene 261 und zweite Führungsschiene 262 eingehängt werden kann. Wie schon bei der Frontwand die beiden Bolzen, verleihen die beiden Führungsschienen 261, 262 der eingehängten Seitenwand 112 Stabilität, so dass diese nur entlang der Führungsschienen 261, 262 horizontal verschiebbar sowie mit einer Schwenk- und Ziehbewegung entgegen der Richtung der Schwerkraft von den Führungsschienen 261, 262 lösbar ist.

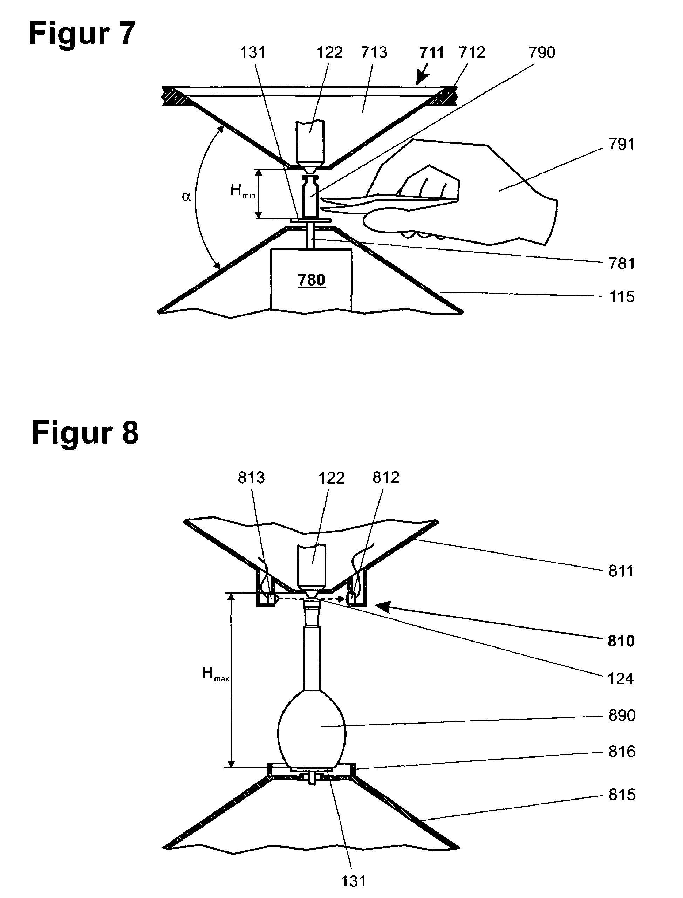

In der Figur 7 ist eine Detailansicht der Abdeckung 711 und des Bodens 115 im Schnitt dargestellt, welche nahezu den in der Figur 1 beschrieben Elementen entsprechen. Die Abdeckung 711 unterscheidet sich von der in der Figur 1 dargestellten Abdeckung lediglich dadurch, dass sie einen Abdeckungsrahmen 712 und ein Abdeckteil 713 aufweist. Das Abdeckteil 713 ist lose in den Abdeckungsrahmen 712 eingelegt, damit dieses zwecks Reinigung einfacher vom Windschutz demontierbar ist. Ferner sind auch der in die Abdeckung 711 beziehungsweise in das Abdeckungsteil 713 eingesetzte Dosierkopf 122, die Waagschale 131, das Lastübertragungselement 781 und ein Teil der schematisch dargestellten Wägezelle 780 sichtbar. Selbstverständlich kann der Dosierkopf 122 auch fest mit dem Abdeckteil 713 verbunden sein. Auf der Waagschale 131 ist das kleinstmögliche Zielgefäss 790 aufgelegt, dessen Bauhöhe nahezu dem minimalen Abstand H ₘᵢₙ der Abdeckung 711 zur Waagschale 131 entspricht, wobei noch der durch die Abdeckung 711 hindurchragende Teil des Dosierkopfs 122 berücksichtigt werden muss. In Figur 7 ist auch der Hauptgrund für die pyramidenförmigen Ausgestaltungen des Bodens 115 und der Abdeckung 711 ersichtlich. Durch die Ausgestaltung des Bodens 115 und der Abdeckung 711 mit stark abfallenden Partien, ist trotz des geringen Abstandes H ₘᵢₙ problemlos ein Zielgefäss 790 austauschbar, wie die schematisch dargestellte Hand 791 mit der Pinzette zeigt. Selbstverständlich ist die Zugänglichkeit vom Öffnungswinkel α abhängig, welcher zwischen den abfallenden Partien des Bodens 115 und der Abdeckung 711 vorhanden ist. Zudem kann das Zielgefäss 790 auf der Waagschale 131 besser eingesehen werden. Ferner werden durch diese Ausgestaltung des Bodens 115 und der Abdeckung 711 Luftströmungen von der Waagschale 131 und dem Zielgefäss 790 besser ferngehalten, so dass rascher ein Wägeresultat von der Wägezelle 780 verfügbar ist.

Wie in der Figur 7 ist auch in der Figur 8 eine Detailansicht einer Abdeckung 811 und eines Bodens 815 im Schnitt dargestellt wobei ein Zielgefäss 890 auf der Waagschale 131 aufliegt, dessen Bauhöhe nahezu dem maximalen Abstand H ₘₐₓ der Abdeckung 811 zur Waagschale 131 entspricht.

Im Unterschied zur Figur 7 weist aber die Abdeckung 811 und der Boden 815 in Figur 8 weitere Ergänzungen auf, die den Betrieb des erfindungsgemässen Laborgerätes unterstützen. So ist am Boden 815 ein Windschutzring 816 ausgebildet, welcher die Waagschale 131 vor Luftströmungen schützt, welche den abfallenden Partien des Bodens 815 empor strömen. Selbstverständlich kann an Stelle des Windschutzringes 816 die Waagschale 131 soweit im Boden 815 versenkt sein, dass die Oberkante des Bodens 815 mit der Auflagefläche der Waagschale 131 bündig ist. Ferner weist die Abdeckung 811 eine Abtastvorrichtung 810 auf, mittels welcher die Lage der Oberkante und gegebenenfalls auch die Lage der Einfüllöffnung eines Zielgefässes 890 ermittelt werden kann. Stellvertretend für eine solche Abtastvorrichtung 810 sind in Figur 8 eine Laserdiode 813 und eine Fotodiode 812 dargestellt, wobei die Signale der Fotodiode 812 an eine nicht dargestellte Steuereinrichtung des Laborgeräts übermittelt werden, welche den Antrieb für die vertikale Verschiebung der Abdeckung 811 steuert. Genauere Abtastresultate können erzielt werden, wenn zwei Laserdioden 811 und zwei Fotozellen 812 vorhanden sind, wobei sich die Strahlen der Laserdioden vorzugsweise knapp unterhalb der Austragungsöffnung 124 des Dosierkopfs 122 kreuzen.

Selbstverständlich können eine Vielzahl weitere bekannte Abtastvorrichtungen 810 wie beispielsweise bildverarbeitende Systeme, Hallsensoren, induktiv und kapazitiv arbeitende Näherungsschalter, Ultraschallsensoren und dergleichen mehr verwendet werden.

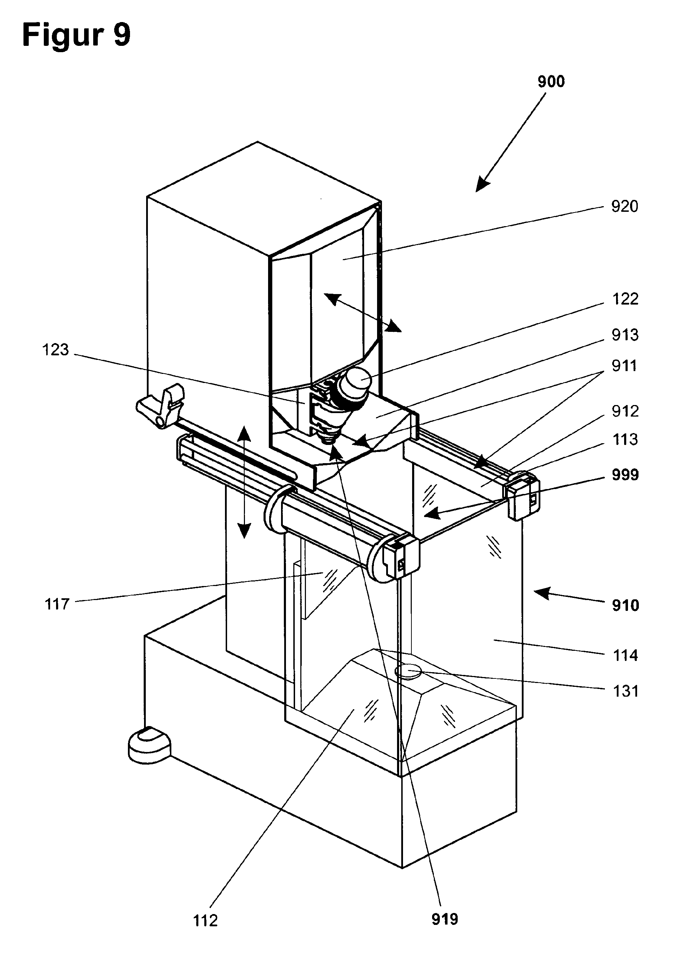

Figur 9 zeigt eine dreidimensionale Darstellung eines Laborgeräts 900 mit einer Dosiervorrichtung 920 und mit einer erfindungsgemässen Windschutzvorrichtung 910 in einer dritten Ausführung, wobei deren Abdeckung 911 in einen Abdeckungsrahmen 912 und in ein Abdeckteil 913 unterteilt ist. Der Durchbruch 919 ist im Abdeckteil 913 angeordnet. Ein Dosierkopf 122 ist in der Dosierkopfhalterung 123 eingesetzt. Dessen unterster Teil mit der Austragungsöffnung reicht durch den Durchbruch 919 hindurch in den Wägeraum.

Ferner sind das Abdeckteil 913 und die mit dem Abdeckteil 913 verbundene Dosiervorrichtung 920 relativ zum Abdeckungsrahmen 912 horizontal verschiebbar. Dadurch wird eine gegen oben gerichtete Öffnung 999 des Windschutzes öffnenbar, wodurch die Waagschale 131 auch von oben mit einem nicht dargestellten Zielgefäss beladen beziehungsweise entladen werden kann. Dies kann beispielsweise mit einer geeigneten Beschickungsvorrichtung, vorzugsweise mit einem Roboterarm geschehen.

Die beiden Seitenwände 112, 113, die Frontwand 114 und das erste Rückwandteil 117 sind mit dem Abdeckungsrahmen 912 verbunden. Der Abdeckungsrahmen 912 ist zusammen mit dem Abdeckteil 913, der Dosiervorrichtung 920 und mit den mit ihm verbundenen Wänden 112, 113, 114, 117 relativ zur Waagschale 131 vertikal verschiebbar.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Unter anderem sind Ausführungsformen des Erfindungsgedankens denkbar, bei welchen beispielsweise die Abdeckung eine genau auf die Einfüllöffnung angepassten Durchbruch aufweist, so dass durch den Durchbruch auch von Hand eindosiert werden kann. Selbstverständlich können Feststoffdosiervorrichtungen und Flüssigkeitsdosiervorrichtungen im Laborgerät mit der erfindungsgemässen Windschutzvorrichtung eingesetzt werden. Auch Temperaturfühler, Rührwerke und weitere Geräte können über den Durchbruch in das Zielgefäss eingeführt werden.

**Bezugszeichenliste**

| | |
|---|---|
| 900, 300, 200, 100 | Laborgerät |
| 910, 410, 310, 210, 110 | Windschutzvorrichtung |
| 911, 811, 711, 311, 111 | Abdeckung |
| 112 | erste Seitenwand |
| 313, 113 | zweite Seitenwand |
| 314,114 | Frontwand |
| 815, 115 | Boden |
| 116 | Rückwand |
| 117 | erstes Rückwandteil |
| 118 | zweites Rückwandteil |
| 919, 119 | Durchbruch |
| 920, 120 | Dosiervorrichtung |
| 121 | Dosiervorrichtungsgehäuse |
| 122 | Dosierkopf |
| 123 | Dosierkopfhalterung |
| 124 | Austragungsöffnung |
| 130 | Sockelgehäuse |
| 131 | Waagschale |
| 132 | Durchführung |
| 133 | der ersten Seitenwand zugewandte Endkante |
| 134 | der zweiten Seitenwand zugewandte Endkante |
| 135 | der Frontwand zugewandte Endkante |
| 136 | der Rückwand zugewandte Endkante |
| 137 | dritte Gehäusewand |
| 138 | erste Gehäusewand |
| 139 | zweite Gehäusewand |
| 140 | Wägeraum |
| 225 | erster Mitnehmer |
| 226 | zweiter Mitnehmer |
| 227 | Führungsstück |
| 251 | erste Dichtungsgleitleiste |
| 252 | zweite Dichtungsgleitleiste |
| 253 | dritte Dichtungsgleitleiste |
| 261 | erste Führungsschiene |
| 262 | zweite Führungsschiene |
| 263 | Langloch |
| 351 | Dichtungswalze |
| 399 | Absaugvorrichtung |
| 480 | Antrieb |
| 481 | Motor |
| 482 | Zahnriemengetriebe |
| 483 | Längsführung |
| 484 | Vertikalführung |
| 581 | Bolzenstück |
| 582 | Bolzen |
| 584, 583 | Nute |
| 585 | Halterung |
| 681 | Ausnehmung |
| 912, 712 | Abdeckungsrahmen |
| 913,713 | Abdeckteil |
| 780 | Wägezelle |
| 781 | Lastübertragungselement |
| 890, 790 | Zielgefäss |
| 791 | Hand |
| 810 | Abtastvorrichtung |
| 812 | Fotodiode |
| 813 | Laserdiode |
| 816 | Windschutzring |
| 999 | Öffnung |

## Patentansprüche

1. Windschutzvorrichtung (110, 210, 310, 410, 910) für ein Laborgerät (100, 200, 300, 900), die einen eine Waagschale (131) umgebenden Wägeraum (140) umschliesst und eine Rückwand (116), eine Frontwand (114, 314), zwei Seitenwände (112, 113, 313), eine Abdeckung (111, 311, 711, 811, 911) mit mindestens einem Durchbruch (119, 919) und einen durch Endkanten (133, 134, 135, 136) begrenzten Boden (115, 815) beinhaltet, **dadurch gekennzeichnet, dass** die Abdeckung (111, 311, 711, 811, 911 ) mindestens mit einer der beiden Seitenwände (112, 113, 313) und/oder mit der Frontwand (114, 314) und/oder mit der Rückwand (116) verbunden ist und die Abdeckung (111, 311, 711, 811, 911) zusammen mit den mit ihr verbundenen Wänden (112, 113, 114, 116, 313, 314) relativ zur Waagschale (131) vertikal verschiebbar ist, dass die vertikal verschiebbare Seitenwand (112, 113, 313) und/oder die Frontwand (114, 314) und/oder die Rückwand (116) an der ihr zugewandten Endkante (133, 134, 135, 136) des Bodens (115, 815) in vertikaler Richtung vorbeigeführt werden kann und dass in jeder vertikalen Position der Abdeckung (111, 311, 711, 811, 911) mindestens eine Seitenwand (112, 113, 313) relativ zur Abdeckung (111, 311, 711, 811, 911) horizontal verschiebbar ist.

2. Windschutzvorrichtung (110, 210, 310, 410, 910) nach Anspruch 1, **dadurch gekennzeichnet, dass** die Abdeckung (111, 311, 711, 811, 911) einen Abdeckungsrahmen (712, 912) und ein Abdeckteil (713, 913) aufweist und der mindestens eine Durchbruch (119, 919) im Abdeckteil (713, 913) angeordnet ist, wobei die mindestens eine Seitenwand (112, 113, 313) und/oder die Frontwand (114, 314) und/oder die Rückwand (116) mit dem Abdeckungsrahmen (712, 912) verbunden ist, der Abdeckungsrahmen (712, 912) mit dem Abdeckteil (713, 913) und mit den mit ihm verbundenen Wänden relativ zur Waagschale (131) vertikal verschiebbar ist und das Abdeckteil (713, 913) relativ zum Abdeckungsrahmen (712, 912) horizontal verschiebbar ist.

3. Windschutzvorrichtung (110, 210, 310, 410, 910) nach Anspruch 1 oder 2, **dadurch gekennzeichnet, dass** beide Seitenwände (112, 113, 313) mit der Abdeckung (111, 311, 711, 811, 911) beziehungsweise mit dem Abdeckungsrahmen (712, 912) verbunden und relativ zur Abdeckung (111, 311, 711, 811, 911) beziehungsweise zum Abdeckungsrahmen (712, 912) horizontal verschiebbar sind.

4. Windschutzvorrichtung (110, 210, 310, 410, 910) nach einem der Ansprüche 1 bis 3, **dadurch gekennzeichnet, dass** mindestens eine Seitenwand (112, 113, 313) und/oder die Frontwand (114, 314) mit der Abdeckung (111, 311, 711, 811, 911) beziehungsweise mit dem Abdeckungsrahmen (712, 912) lösbar verbunden ist/sind.

5. Windschutzvorrichtung (110, 210, 310, 410, 910) nach einem der Ansprüche 1 bis 4 **dadurch gekennzeichnet, dass** das Abdeckteil (713, 913) in den Abdeckungsrahmen (712, 912) lose einlegbar ist.

6. Windschutzvorrichtung (110, 210, 310, 410, 910) nach einem der Ansprüche 1 bis 5 **dadurch gekennzeichnet, dass** der mindestens eine Durchbruch (119, 919) mittels eines in der Abdeckung (111, 311, 711, 811, 911) beziehungsweise im Abdeckteil (713, 913) angeordneten Schiebers verschliessbar ist.

7. Windschutzvorrichtung (110, 210, 310, 410, 910) nach einem der Ansprüche 1 bis 6 **dadurch gekennzeichnet, dass** zur horizontalen Führung der mindestens einen, mit der Abdeckung (111, 311, 711, 811, 911) verbundenen, verschiebbaren Seitenwand (112, 113, 313) mindestens eine Führungsschiene (261, 262) an der Abdeckung beziehungsweise am Abdeckungsrahmen (712, 912) angeordnet ist und die verschiebbare Seitenwand (112, 113, 313) mindestens ein an der Führungsschiene (261, 262) geführtes Führungsstück (227) aufweist.

8. Windschutzvorrichtung (110, 210, 310, 410, 910) nach einem der Ansprüche 1 bis 7, **dadurch gekennzeichnet, dass** eine mindestens über die Länge der Endkante (133, 134, 135, 136) sich erstreckende Dichtungsgleitleiste (251, 252, 253), Dichtungsbürste oder Dichtungswalze (351) an mindestens einer Endkante (133, 134, 135, 136) des Bodens (115, 815) angeordnet ist.

9. Windschutzvorrichtung (110, 210, 310, 410, 910) nach einem der Ansprüche 1 bis 8, **dadurch gekennzeichnet, dass** zur vertikalen und/oder horizontalen Verschiebung mindestens ein Antrieb (480) vorhanden ist.

10. Windschutzvorrichtung (110, 210, 310, 410, 910) nach einem der Ansprüche 1 bis 9, **dadurch gekennzeichnet, dass** der Boden (115, 815) ausgehend von seinem Flächenschwerpunkt zu mindestens einer horizontal verschiebbaren Seitenwand (112, 113, 313) hin, abfallend ausgestaltet ist.

11. Windschutzvorrichtung (110, 210, 310, 410, 910) nach einem der Ansprüche 1 bis 10, **dadurch gekennzeichnet, dass** ausgehend von der Frontwand (114, 314) und/oder der mindestens einen horizontal verschiebbaren Seitenwand (112, 113, 313) die Abdeckung (111, 311, 711, 811, 911) zu ihrem Flächenschwerpunkt hin abfallend ausgestaltet ist.

12. Laborgerät (100, 200, 300, 900), insbesondere eine Waage, ein Dosiergerät eine Pipettier- oder Titriervorrichtung mit einer Windschutzvorrichtung (110, 210, 310, 410, 910) nach einem der Ansprüche 1 bis 11.

13. Laborgerät (100, 200, 300, 900) nach Anspruch 12, **dadurch gekennzeichnet, dass** das Laborgerät (100, 200, 300, 900) eine Dosiervorrichtung (120, 920) beinhaltet, deren Austragungsöffnung (124) für Dosiergut zum Durchbruch (119, 919) ausgerichtet, oberhalb der Abdeckung (111, 311, 711, 811, 911) der Windschutzvorrichtung (110, 210, 310, 410, 910) angeordnet ist oder welche Dosiervorrichtung (120, 920) zumindest teilweise durch den Durchbruch (119, 919) hindurch ragt und deren Austragungsöffnung (124) für Dosiergut dadurch unterhalb der Abdeckung (111, 311, 711, 811, 911) der Windschutzvorrichtung (110, 210, 310, 410, 910) im Wägeraum (140) angeordnet ist.

14. Laborgerät (100, 200, 300, 900) nach Anspruch 13, **dadurch gekennzeichnet, dass** eine Abtastvorrichtung (810) vorhanden ist, mittels welcher Abtastvorrichtung (810) zumindest die Höhe eines auf die Waagschale (131) aufgelegten Zielgefässes erfassbar ist.

15. Laborgerät (100, 200, 300, 900) nach Anspruch 14, **dadurch gekennzeichnet, dass** die Abtastvorrichtung (810) zwei Laserdioden (813) und zwei Fotozellen (812) beinhaltet, wobei sich die beiden von den Laserdioden (813) emittierten Strahlen unmittelbar unterhalb des Durchbruchs (119, 919) oder der Austragungsöffnung (124) kreuzen.

## Claims

1. Draft protection device (110, 210, 310, 410, 910) for a laboratory instrument (100, 200, 300, 900), which encloses a weighing compartment (140) surrounding a balance pan (131) and comprises a rear wall (116), a front wall (114, 314), two sidewalls (112, 113, 313), a top cover (111, 311, 711, 811, 911) with at least one opening (119, 919), and a floor (115, 815) delimited by border edges (133, 134, 135, 136), **characterized in that** the top cover (111, 311, 711, 811, 911) is connected to at least one of the two sidewalls (112, 113, 313) and/or to the front wall (114, 314) and/or to the rear wall (116), and that the top cover (111, 311, 711, 811, 911) and the walls (112, 113, 114, 115, 116, 313, 314) which are connected to it can be moved up and down together relative to the balance pan (131), that the vertically movable sidewall (112, 113, 313) and/or the front wall (114, 314) and/or the rear wall (116) can be moved vertically past the respective adjacent border edge (133, 134, 135, 136) of the floor (115, 815), and that in any vertical position of the top cover (111, 311, 711, 811, 911) at least one sidewall (112, 113, 313) is slidable in horizontal movement relative to the top cover (111, 311, 711, 811, 911).

2. Draft protection device (110, 210, 310, 410, 910) according to claim 1, **characterized in that** the top cover (111, 311, 711, 811, 911) comprises a top cover frame (712, 912) and a top cover insert (713, 913) and that the at least one opening (119, 919) is arranged in the top cover insert (713, 913), wherein the at least one sidewall (112, 113, 313) and/or the front wall (114, 314) and/or the rear wall (116) is connected to the top cover frame (712, 912), the top cover frame (712, 912) with the top cover insert (713, 913) and the walls that are connected to it are vertically slidable relative to the balance pan (131), and the top cover insert (713, 913) is horizontally slidable relative to the top cover frame (712, 912).

3. Draft protection device (110, 210, 310, 410, 910) according to claim 1 or 2, **characterized in that** both sidewalls (112, 113, 313) are connected to, and are horizontally slidable relative to, the top cover (111, 311, 711, 811, 911) or, if applicable, to the top cover frame (712, 912).

4. Draft protection device (110, 210, 310, 410, 910) according to one of the claims 1 to 3, **characterized in that** at least one of the sidewalls (112, 113, 313) and/or the front wall (114, 314) is releasably connected to the top cover (111, 311, 711, 811, 911) or, if applicable, to the top cover frame (712, 912).

5. Draft protection device (110, 210, 310, 410, 910) according to one of the claims 1 to 4, **characterized in that** the top cover insert (713, 913) can be loosely set into the top cover frame (712, 912).

6. Draft protection device (110, 210, 310, 410, 910) according to one of the claims 1 to 5, **characterized in that** the at least one opening (119, 919) can be closed by means of a slider that is arranged in the top cover (111, 311, 711, 811, 911) or, if applicable, in the top cover insert (713, 913).

7. Draft protection device (110, 210, 310, 410, 910) according to one of the claims 1 to 6, **characterized in that** for the horizontal guidance of the at least one slidable sidewall (112, 113, 313) that is connected to the top cover (111, 311, 711, 811, 911), at least one guide rail (261, 262) is arranged at the top cover or, if applicable, at the top cover frame (712, 912), and that the slidable sidewall (112, 113, 313) comprises at least one guide element (227) constrained to glide along the guide rail (261, 262).

8. Draft protection device (110, 210, 310, 410, 910) according to one of the claims 1 to 7, **characterized in that** a sealing glide strip (251, 252, 253), a sealing brush or a sealing roller (351), extending over at least the length of the border edge (133, 134, 135, 136), is arranged on at least one border edge (133, 134, 135, 136) of the floor (115, 815).

9. Draft protection device (110, 210, 310, 410, 910) according to one of the claims 1 to 8, **characterized in that** there is at least one drive mechanism (480) serving to power the vertical and/or horizontal movement.

10. Draft protection device (110, 210, 310, 410, 910) according to one of the claims 1 to 9, **characterized in that** the floor (115, 815) is shaped so that it slopes downward from the centroid of its surface area towards at least one of the horizontally slidable sidewalls (112, 113, 313).

11. Draft protection device (110, 210, 310, 410, 910) according to one of the claims 1 to 10, **characterized in that** the top cover (111, 311, 711, 911) is shaped so that it slopes downward from the front wall (114, 314) and/or from the at least one horizontally slidable sidewall (112, 113, 313) towards the centroid of its surface area.

12. Laboratory instrument (100, 200, 300, 900), specifically a balance, a dosage-dispensing instrument, a pipetting- or titrating device, with a draft protection device (110, 210, 310, 410, 910) according to one of the claims 1 to 11.

13. Laboratory instrument (100, 200, 300, 900) according to claim 12, **characterized in that** the laboratory instrument (100, 200, 300, 900) comprises a dosage-dispensing device (120, 920) arranged so that its delivery orifice (124) for dosage material is arranged above the top cover (111, 311, 711, 811, 911) of the draft protection device (110, 210, 310, 410, 910), in alignment with the opening (119, 919), or so that the dosage-dispensing device (120, 920) reaches at least partially through the opening (119, 919) and that its delivery orifice (124) for dosage material is therefore arranged below the top cover (111, 311, 711, 811, 911) of the draft protection device (110, 210, 310, 410, 910), i.e. inside the weighing compartment (140).

14. Laboratory instrument (100, 200, 300, 900) according to claim 13, **characterized in that** there is a sensor device (810), by means of which at least the height of a receiving container set on the balance pan (131) can be detected.

15. Laboratory instrument (100, 200, 300, 900) according to claim 14, **characterized in that** the sensor device (810) comprises two laser diodes (813) and two photo cells (812), wherein the rays emitted by the laser diodes (813) cross each other immediately below the opening (119, 919) or the delivery orifice (124).

## Revendications

1. Dispositif de protection contre le vent (110, 210, 310, 410, 910) pour un appareil de laboratoire (100, 200, 300, 900), encerclant une chambre de pesage (140) autour d'une coupelle de pesage (131) et comportant une paroi arrière (116), une paroi avant (114, 314), deux parois latérales (112, 113, 313), un couvercle (111, 311, 711, 811, 911) avec au moins une percée (119, 919) et un fond (115, 815) délimité par des bords finaux (133, 134, 135, 136), **caractérisé en ce que** le couvercle (111, 311, 711, 811, 911) est relié au moins à l'une des deux parois latérales (112, 113, 313) et/ou à la paroi avant (114, 314) et/ou à la paroi arrière (116), et le couvercle (111, 311, 711, 811, 911) est déplaçable verticalement par rapport à la coupelle de pesage (131), ensemble avec les parois (112, 113, 114, 116, 313, 314) auxquelles il est relié, **en ce que** la paroi latérale (112, 113, 313) déplaçable verticalement et/ou la paroi avant (114, 314) et/ou la paroi arrière (116) peut/peuvent être déplacée(s) dans la direction verticale devant le bord final (133, 134, 135, 136) qui est tourné vers elle, et **en ce que** dans chaque position verticale du couvercle (111, 311, 711, 811, 911), au moins une paroi latérale (112, 113, 313) peut être déplacée horizontalement par rapport au couvercle (111, 311, 711, 811, 911).

2. Dispositif de protection contre le vent (110, 210, 310, 410, 910) selon la revendication 1, **caractérisé en ce que** le couvercle (111, 311, 711, 811, 911) comporte un cadre de recouvrement (712, 912) et une pièce de couverture (713, 913), et l'au moins une percée (119, 919) est agencée dans la pièce de couverture (713, 913), dans lequel l'au moins une paroi latérale (112, 113, 313) et/ou la paroi avant (114, 314) et/ou la paroi arrière (116) est/sont reliée(s) au cadre de recouvrement (712, 912), le cadre de recouvrement (712, 912) peut être déplacé verticalement par rapport à la coupelle de pesage (131), ensemble avec la pièce de couverture (713, 913) et avec les parois auxquelles il est relié, tandis que la pièce de couverture (713, 913) peut être déplacée horizontalement par rapport au cadre de recouvrement (712, 912).

3. Dispositif de protection contre le vent (110, 210, 310, 410, 910) selon la revendication 1 ou 2, **caractérisé en ce que** les deux parois latérales (112, 113, 313) sont reliées au couvercle (111, 311, 711, 811, 911) ou au cadre de recouvrement (712, 912) et peuvent être déplacées horizontalement par rapport au couvercle (111, 311, 711, 811, 911) ou au cadre de recouvrement (712, 912).

4. Dispositif de protection contre le vent (110, 210, 310, 410, 910) selon l'une des revendications 1 à 3, **caractérisé en ce que** l'au moins une paroi latérale (112, 113, 313) et/ou la paroi avant (114, 314) est/sont reliée(s) de façon détachable au couvercle (111, 311, 711, 811, 911) ou au cadre de recouvrement (712, 912).

5. Dispositif de protection contre le vent (110, 210, 310, 410, 910) selon l'une des revendications 1 à 4, **caractérisé en ce que** la pièce de couverture (713, 913) peut être inséré détaché dans le cadre de recouvrement (712, 912).

6. Dispositif de protection contre le vent (110, 210, 310, 410, 910) selon l'une des revendications 1 à 5, **caractérisé en ce que** l'au moins une percée (119, 919) peut être fermé au moyen du couvercle (111, 311, 711, 811, 911) ou d'un poussoir agencé dans la pièce de couverture (713, 913).

7. Dispositif de protection contre le vent (110, 210, 310, 410, 910) selon l'une des revendications 1 à 6, **caractérisé en ce que** pour le guidage horizontal de l'au moins une paroi latérale (112, 113, 313) reliée au couvercle (111, 311, 711, 811, 911), au moins un rail de guidage (261, 262) est agencé sur le couvercle ou sur le cadre de recouvrement (712, 912), et la paroi latérale (112, 113, 313) déplaçable comporte au moins une pièce de guidage (227) guidée sur le rail de guidage (261, 262).

8. Dispositif de protection contre le vent (110, 210, 310, 410, 910) selon l'une des revendications 1 à 7, **caractérisé en ce que** une glissière d'étanchéité (251, 252, 253), une brosse d'étanchéité ou un cylindre d'étanchéité (351) s'étendant au moins sur la longueur du bord final (133, 134, 135, 136) est agencé(e) sur au moins un bord final (133, 134, 135, 136) du fond (115, 815).

9. Dispositif de protection contre le vent (110, 210, 310, 410, 910) selon l'une des revendications 1 à 8, **caractérisé en ce que** pour le déplacement vertical et/ou horizontal, il est prévu au moins un entraînement (480).

10. Dispositif de protection contre le vent (110, 210, 310, 410, 910) selon l'une des revendications 1 à 9, **caractérisé en ce que** le fond (115, 815) est conçu en pente descendante à partir de son point de gravité de surface, vers au moins une paroi latérale (112, 113, 313) déplaçable horizontalement.

11. Dispositif de protection contre le vent (110, 210, 310, 410, 910) selon l'une des revendications 1 à 10, **caractérisé en ce qu'**à partir de la paroi avant (114, 314) et/ou de l'au moins une paroi latérale (112, 113, 313) déplaçable horizontalement, le couvercle (111, 311, 711, 811, 911) est conçu en pente descendante vers son point de gravité de surface.

12. Appareil de laboratoire (100, 200, 300, 900), en particulier une balance, un appareil de dosage, un dispositif à pipette ou de titrage, avec un dispositif de protection contre le vent (110, 210, 310, 410, 910) selon l'une des revendications 1 à 11.

13. Appareil de laboratoire (100, 200, 300, 900) selon la revendication 12, **caractérisé en ce que** l'appareil de laboratoire (100, 200, 300, 900) contient un dispositif de dosage (120, 920) dont l'ouverture de distribution (124) pour le produit à doser est orientée vers la percée (119, 919) et agencée au-dessus du couvercle (111, 311, 711, 811, 911) du dispositif de protection contre le vent (110, 210, 310, 410, 910), ou ledit dispositif de dosage (120, 920) traverse au moins partiellement la percée (119, 919) et comporte une ouverture de distribution (124) pour le produit à doser agencée en-dessous du couvercle (111, 311, 711, 811, 911) du dispositif de protection contre le vent (110, 210, 310, 410, 910) dans la chambre de pesage (140).

14. Appareil de laboratoire (100, 200, 300, 900) selon la revendication 13, **caractérisé en ce qu'**il est prévu un dispositif de détection (810), ledit dispositif de détection (810) permettant de déterminer au moins la hauteur d'un récipient cible posé sur la coupelle de pesage (131).

15. Appareil de laboratoire (100, 200, 300, 900) selon la revendication 14, **caractérisé en ce que** le dispositif de détection (810) contient deux diodes laser (813) et deux cellules photorésistantes (812), dans lequel les deux rayons émis par les diodes laser (813) se croisent directement sous la percée (119, 919) ou l'ouverture de distribution (124).
